# FASCICULE DE BREVET EUROPEEN

(11) **EP 4 144 966 B1**
(45) Date de publication et mention de la délivrance du brevet: **25.02.2026**
(21) Numéro de dépôt: 22192246.1
(22) Date de dépôt: 25.08.2022
(51) Int. Cl.: F01N 3/20, F01P 11/02, F01N 13/14, F01N 13/16, F28D 1/02, F28D 7/10, F28D 20/00, F28D 21/00

(54) **DISPOSITIF DE STOCKAGE D'UN PREMIER LIQUIDE DESTINÉ À CHAUFFER UN DEUXIÈME LIQUIDE**
VORRICHTUNG ZUM SPEICHERN EINER ERSTEN FLÜSSIGKEIT, MIT DER EINE ZWEITE FLÜSSIGKEIT ERHITZT WERDEN SOLL
DEVICE FOR STORING A FIRST LIQUID INTENDED FOR HEATING A SECOND LIQUID

(30) Priorité: 02.09.2021 FR 2109166
(43) Date de publication de la demande: 08.03.2023
(73) Titulaire: Renault s.a.s, 92100 Boulogne Billancourt (FR)
(72) Inventeur: CANTERO, Francis, 78280 GUYANCOURT (FR); LECROQ, Dominique, 78280 GUYANCOURT (FR)

(56) Documents cités:
- EP-B1- 0 771 704
- EP-B1- 3 415 737
- JP-B2- 5 406 309
- US-B1- 6 223 526
- US-B2- 10 507 722

## Description

### Domaine technique de l'invention

L'invention concerne un dispositif comprenant un premier volume destiné à stocker un premier liquide et un deuxième volume destiné à stocker un deuxième liquide, le premier liquide étant destiné à chauffer le deuxième liquide. L'invention porte encore sur un système comprenant un tel dispositif. L'invention porte encore sur un véhicule comprenant un tel système ou un tel dispositif.

### Etat de la technique antérieure

Un véhicule industriel comprenant un moteur à combustion interne, notamment de type poids lourd, comprend généralement un moyen de réduction catalytique sélective des oxydes d'azote NOx (connu sous l'abréviation anglo-saxone SCR pour Selective Catalyst Reduction). Un tel moyen assure la dépollution au niveau du système d'échappement en y injectant de l'urée. Un tel véhicule comprend alors un réservoir de stockage de l'urée et un circuit de distribution et d'injection de l'urée. Du fait que l'urée gèle et/ou cristallise à une température extérieure de l'ordre de moins 11 degrés Celsius, un tel réservoir et/ou un tel circuit de distribution d'urée comprend généralement des moyens de chauffage pour palier à un tel changement de phase de l'urée. Généralement, une résistance ou une nappe, alimentée en énergie électrique, est implantée au niveau du réservoir d'urée et/ou du circuit de distribution et d'injection. Seulement, lorsque la température extérieure est négative, et a fortiori lorsque le moteur est froid, plusieurs minutes sont nécessaires avant de pouvoir injecter de l'urée dans le système d'échappement. Ainsi, pendant les premières minutes après le démarrage du véhicule par temps froid, le traitement des oxydes d'azote n'est pas optimal voire ne fonctionne pas.

Du fait de normes de dépollution davantage sévères pour les véhicules automobiles de type véhicule particuliers, de tels véhicules nécessitent désormais d'être équipés d'un moyen de réduction catalytique sélective. L'absence de fonctionnement optimal du moyen de réduction catalytique sélective pendant les premières minutes après démarrage, notamment par temps froid, n'est pas acceptable vis-à-vis de telles normes.

Les documents EP3415737B1, JP5406309B2, US6223526B1, US10507722B2, EP0771704B1 divulguent des systèmes de stockage de deux liquides avec échange de chaleur entre les deux liquides.

### Présentation de l'invention

Le but de l'invention est de fournir un dispositif remédiant aux inconvénients ci-dessus. En particulier, l'invention propose une solution permettant de conserver une réserve d'urée à l'état liquide pendant une longue période après coupure du moteur, l'urée à l'état liquide pouvant alors être utilisée dès le redémarrage du moteur, et ainsi d'éviter la consommation d'énergie électrique pour le réchauffage de l'urée par temps froid.

### Résumé de l'invention

Pour atteindre cet objectif, l'invention porte sur un dispositif selon la revendication 1.

Le premier volume et le deuxième volume peuvent être indépendants.

Le dispositif comprend une paroi interne, la paroi interne étant agencée entre le premier volume et le deuxième volume de sorte à transférer de la chaleur d'un tel premier liquide vers un tel deuxième liquide par conduction thermique au niveau de la paroi interne.

La paroi interne peut comprendre une forme de conduit qui définit au moins partiellement le deuxième volume, notamment une forme de conduit de section cylindrique, le conduit pouvant s'étendre, ou pouvant s'étendre sensiblement, ou pouvant s'étendre au moins en partie, dans le premier volume.

La paroi interne peut avoir une faible épaisseur, notamment comprise entre 0.8 mm et 1.5 mm, et la paroi interne est en matériau ayant une forte conductivité thermique, notamment en aluminium ou en alliage d'aluminium.

Le dispositif peut être monobloc.

Le dispositif comprend une paroi externe isolée, notamment recouverte d'un isolant thermique ou comprenant un isolant thermique.

L'invention porte encore sur un système comprenant un dispositif tel que défini précédemment, le système comprenant :
- un moyen d'injection d'un deuxième liquide de type urée ou comprenant de l'urée au sein d'un moyen de réduction catalytique sélective au niveau d'une ligne d'échappement d'un moyen d'entraînement de type moteur à combustion interne, le moyen d'injection étant connecté au deuxième volume de stockage du dispositif,
- un circuit de refroidissement d'un tel moyen d'entraînement d'un véhicule, notamment d'un véhicule automobile, comprenant un premier liquide de type liquide de refroidissement circulant au sein du circuit de refroidissement, le circuit de refroidissement comprenant le premier volume de stockage du dispositif, de sorte que le premier liquide au sein du circuit de refroidissement réchauffe et/ou maintient à température et/ou chauffe le deuxième liquide présent au sein du deuxième volume du dispositif.

Le système peut comprendre un réservoir de deuxième liquide connecté au deuxième volume du dispositif de sorte que la contenance du deuxième volume est une réserve tampon du deuxième liquide.

L'invention porte encore sur un véhicule, notamment un véhicule automobile, comprenant un système tel que défini précédemment, ou un dispositif tel que défini précédemment.

### Présentation des figures

Ces objets, caractéristiques et avantages de la présente invention seront exposés en détail dans la description suivante d'un mode de réalisation d'un dispositif faite à titre non-limitatif en relation avec les figures jointes parmi lesquelles :
[Fig. 1] La figure 1 est une vue schématique d'un véhicule automobile selon un mode de réalisation.
[Fig. 2] La figure 2 est une vue schématique en perspective d'un dispositif selon un mode de réalisation.
[Fig. 3] La figure 3 est une vue en perspective du dispositif selon le mode de réalisation.
[Fig. 4] La figure 4 est une vue de face du dispositif selon le mode de réalisation.
[Fig. 5] La figure 5 est une vue schématique d'un agencement comprenant le dispositif selon un mode de réalisation.

### Description détaillée

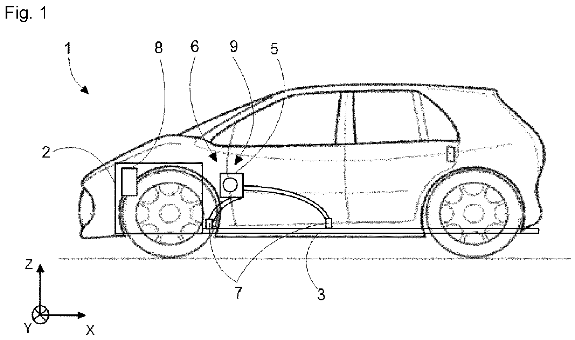

Comme illustré sur la figure 1, le véhicule 1 comprend un système 6 qui sera décrit par la suite. Le véhicule 1 est de préférence un véhicule automobile, par exemple un véhicule de type citadine ou berline. Alternativement, le véhicule 1 est un véhicule automobile utilitaire, par exemple un fourgon, ou encore un véhicule industriel, par exemple un poids lourd.

De préférence, le véhicule 1 comprend un moyen d'entrainement 2 du véhicule.

Avantageusement, le moyen d'entraînement 2 est un moteur thermique de type moteur à combustion interne. Le moteur comprend alors de préférence une ligne d'échappement 3. De préférence, le véhicule ou le moteur comprend encore un moyen de réduction catalytique sélective 9 (SCR en abréviations anglo-saxonnes).

Le véhicule 1 comprend un dispositif 5.

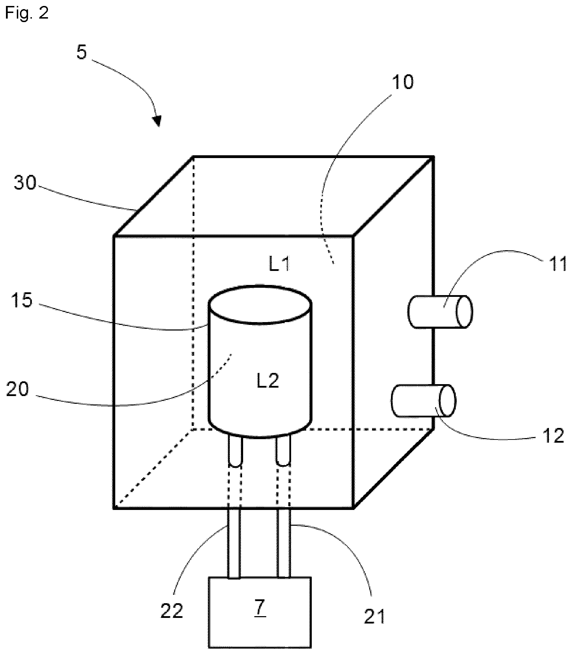

Plus précisément, comme illustré sur la figure 2, le dispositif 5 comprend un premier volume 10. Le premier volume 10 est destiné à stocker un premier liquide L1. De préférence, le premier liquide L1 est un liquide de refroidissement du moyen d'entraînement 2 du véhicule.

Le dispositif 5 comprend encore un deuxième volume 20. Le deuxième volume 20 est destiné à stocker un deuxième liquide L2. De préférence, le deuxième liquide est utilisé dans le moyen de réduction catalytique sélective 9, de préférence au niveau de la ligne d'échappement 3 du moteur. Avantageusement, le deuxième liquide L2 est de l'urée ou comprend de l'urée.

Comme il sera expliqué par la suite, le premier volume et/ou le deuxième volume est agencé de sorte à chauffer et/ou à maintenir à température et/ou à réchauffer le deuxième liquide par transfert de chaleur issue du premier liquide.

Avantageusement, le premier volume 10 et le deuxième volume 20 sont indépendants. De préférence, le dispositif 5 comprend une paroi interne 15. La paroi interne 15 est agencée entre le premier volume 10 et le deuxième volume 20. Dans ce cas, le transfert de la chaleur du premier liquide vers le deuxième liquide est assuré par conduction thermique au niveau de la paroi interne 15. De préférence, la paroi interne 15 s'étend autour du deuxième volume 20.

Avantageusement, comme illustré sur la figure 2, la paroi interne 15 comprend une forme de conduit qui définit au moins partiellement le deuxième volume 20. Par exemple, la paroi interne 15 a une forme de conduit, par exemple de section cylindrique ou sensiblement cylindrique. Par exemple, le conduit s'étend, ou s'étend sensiblement, ou s'étend au moins en partie dans le premier volume 10.

De préférence, la paroi interne 15 a une faible épaisseur, par exemple comprise entre 0.8 mm et 1.5 mm. En complément ou alternativement, la paroi interne 15 est en matériau ayant une forte conductivité thermique, préférentiellement de l'aluminium dont la conductivité thermique est d'environ 229 W/m.K à 20°C.

Par exemple, le dispositif 5 est monobloc. Par exemple, le dispositif 5 est venu de moulage.

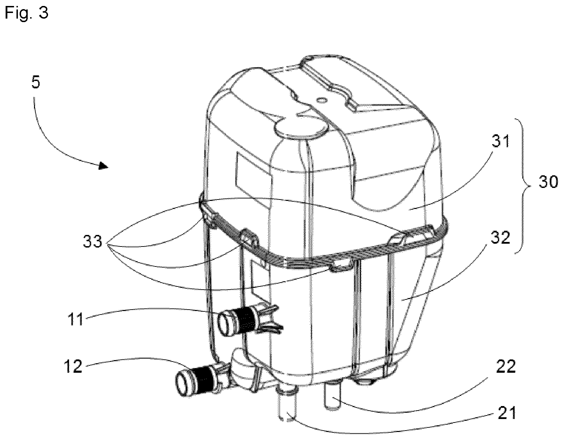

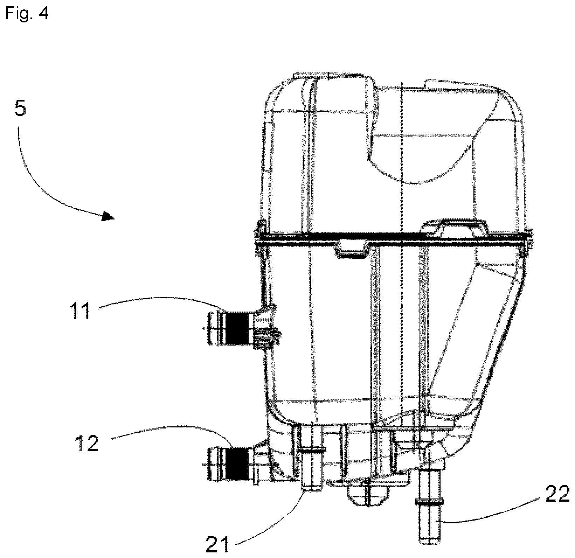

De préférence, le dispositif 5 comprend une paroi externe 30. Avantageusement, la paroi externe 30 est isolée. Par exemple, l'isolation est obtenue en recouvrant d'un isolant thermique la paroi externe 30. Alternativement, la paroi externe 30 comprend un isolant thermique. Par exemple, comme illustré sur les figures 3 et 4, la paroi externe 30 comprend deux parties ou coques 31, 32. Par exemple, les deux coques 31, 32 sont fixées l'une à l'autre par le biais d'un moyen de fixation, notamment des clips 33. Par exemple un joint externe est intercalé entre les deux coques de sorte à obtenir l'étanchéité du premier volume 10 par rapport à l'environnement extérieur et un joint interne est intercalé entre les deux coques de sorte à obtenir l'étanchéité du deuxième volume 20 par rapport au premier volume 10.

De préférence, le premier volume 10 comprend une entrée et une sortie 11, 12 pour le premier liquide L1 (liquide de refroidissement du moteur 2) et le deuxième volume 20 comprend une entrée et une sortie 21, 22 pour le deuxième liquide L2 (urée).

De préférence, la paroi interne 15 est distante de la paroi externe 30 de sorte que le premier liquide L1 recouvre intégralement, ou sensiblement intégralement, la paroi interne 15 lorsque le premier volume est plein ou sensiblement plein de premier liquide.

Par exemple, le premier volume a une capacité égale, ou sensiblement égale, au deuxième volume. Alternativement, le deuxième volume a une capacité supérieure à la capacité du premier volume. De préférence, la capacité du premier volume est supérieure à la capacité du deuxième volume de sorte à favoriser le réchauffage, tout du moins le maintien à température, du deuxième liquide par transfert de la chaleur depuis le premier liquide.

Plus précisément, le système 6 comprend le dispositif 5. Le système 6 comprend encore un moyen d'injection 7 du deuxième liquide au sein du moyen de réduction catalytique sélective 9 et/ou au niveau de la ligne échappement 3 du moyen d'entraînement 2. Pour rappel, le moyen d'entraînement est de préférence un moteur à combustion interne, par exemple à cycle Diesel. Le moyen d'injection 7 est connecté au deuxième volume 20 de stockage du dispositif 5. Le système 6 comprend encore un circuit de refroidissement 8 du moyen d'entraînement 2 du véhicule 1.

Le circuit de refroidissement 8 comprend, ou est rempli, de premier liquide, de préférence de type liquide de refroidissement. De préférence, le liquide de refroidissement circule au sein du circuit de refroidissement 8, par exemple par le biais d'une pompe appelée généralement pompe à eau (non illustrée). De préférence, le circuit de refroidissement 8 comprend le premier volume 10 de stockage du dispositif 5. Le premier volume 10 est agencé de sorte que le premier liquide présent ou circulant au sein du circuit de refroidissement 8 réchauffe et/ou maintient à température et/ou chauffe le deuxième liquide présent au sein du deuxième volume 20 du dispositif 5.

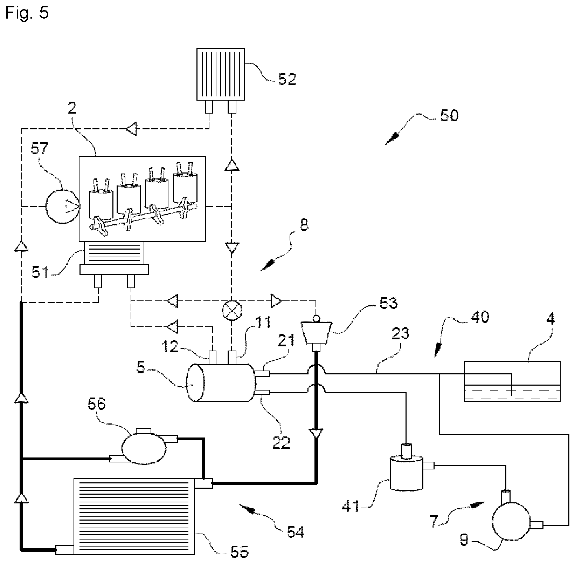

De préférence, comme illustré sur la figure 5, le système comprend encore un réservoir ou réserve 4 de deuxième liquide. Le réservoir 4 est connecté au deuxième volume 20 du dispositif 5 par un conduit ou tuyau ou tubulure ou ligne 23. Ainsi, grâce à la présence de ce réservoir 4, la contenance du deuxième volume 20 au sein du dispositif 5 n'est qu'une contenance tampon d'urée.

Un exemple d'agencement 50, illustré sur la figure 5, comprend le moteur à combustion interne 2. Un échangeur moteur 51, de préférence eau ou liquide de refroidissement / huile moteur, est agencé au sein du circuit de refroidissement 8 du moteur à combustion interne 2. De préférence, un radiateur 52 est agencé au sein du circuit de refroidissement 8 de sorte à assurer le refroidissement du liquide de refroidissement par échange avec l'air. Par exemple, une branche du circuit 8 comprend un thermostat 53 permettant l'évacuation du liquide de refroidissement atteignant une haute température prédéterminée. Cette évacuation du liquide de refroidissement se fait dans une partie 54 haute température du circuit de refroidissement 8. Par exemple, cette partie 54 comprend un radiateur haute température 55 et un vase d'expansion 56. L'agencement 50 comprend encore un circuit secondaire 40 pour le deuxième liquide. Le circuit secondaire 40 comprend de préférence une pompe 41 apte à pomper le deuxième liquide depuis le deuxième volume 20 du dispositif 5 de sorte à approvisionner le moyen d'injection d'urée 7 et/ou le moyen de réduction catalytique 9.

Ainsi, comme illustré sur la figure 5, le dispositif 5 est implanté à la fois dans le circuit de refroidissement 8 du moteur 2 et dans le circuit secondaire 40 d'urée.

Plus précisément, lors du fonctionnement du moteur (par exemple en cas de roulage du véhicule 1 comprenant le moteur 2), le liquide de refroidissement circulant dans le circuit 8 est chauffé, en particulier au niveau de l'échangeur eau/huile 51. Lorsque le liquide de refroidissement atteint une température haute cible, le thermostat 53 s'ouvre pour permettre le passage du liquide de refroidissement dans la partie haute température 54 du circuit 8 de sorte à abaisser la température du liquide de refroidissement. Cette baisse de température du liquide de refroidissement est assurée par le radiateur haute température 55.

De préférence, le liquide de refroidissement ne circule que lorsque le moteur thermique 2 fonctionne.

Par exemple, la circulation du liquide de refroidissement au sein du circuit 8 ne se déclenche pas au démarrage du moteur. Dans ce cas, la circulation du liquide de refroidissement se déclenche qu'après l'atteinte d'une valeur seuil du liquide de refroidissement de sorte à favoriser une élévation rapide de sa température. Quoi qu'il en soit, un chauffage rapide du liquide de refroidissement est recherché pour que le moteur 2 monte rapidement à sa température de fonctionnement optimale. Alternativement, la circulation du liquide de refroidissement dans le circuit 8 se fait dès le démarrage du moteur, notamment par l'actionnement d'une pompe 57. La circulation du liquide de refroidissement engendre sa circulation au sein du premier volume 10 ce qui a pour effet d'augmenter immédiatement la température du dispositif et en particulier de la paroi interne 15. L'urée présente dans le deuxième volume 20 est alors chauffée immédiatement, notamment par conduction thermique. De préférence le deuxième volume 20 est constamment, ou sensiblement constamment, rempli d'urée via un approvisionnement depuis le réservoir 4 au fur et à mesure du vidage du deuxième volume 20.

A l'arrêt du moteur thermique 2, le liquide de refroidissement demeure à température. Grâce à la paroi externe 30 isolée, le liquide de refroidissement présent dans le premier volume 10 du dispositif 5 demeure à température pendant une longue période. Il en résulte que l'urée présente dans le deuxième volume 20 récupère au moins partiellement la chaleur du liquide de refroidissement qui l'entoure ou l'entoure sensiblement. Lors d'un démarrage ultérieur du moteur, par exemple après une douzaine d'heures, et dans des conditions de temps froids de l'ordre de moins 15 degrés Celsius par exemple, l'urée n'a pas cristallisé. En effet, au cours d'une telle période sans fonctionnement du moteur, le liquide de refroidissement a transmis de la chaleur à l'urée, le premier volume rempli ou rempli sensiblement de liquide de refroidissement ayant en outre permis d'isoler l'urée présente dans le deuxième volume par rapport au froid extérieur. Pour rappel, de préférence, le deuxième volume 20 est au moins partiellement entouré du premier volume 10. Ainsi, lors du démarrage suivant, le moyen de réduction catalytique est opérationnel dès les premiers instants, sans nécessiter de réchauffer l'urée. En effet, l'urée injectée dans le moyen de réduction catalytique provient directement, ou sensiblement directement, du deuxième volume 20.

Autrement dit, dans le mode de réalisation illustré, le dispositif 5 est un bocal de stockage d'eau chaude (liquide de refroidissement) mutualisé avec un circuit d'urée.

Grâce à la solution, les exigences réglementaires obligeant à réduire les émissions de polluants de type NOx notamment dans les ambiances froides pouvant aller jusqu'à moins 2 degrés Celsius voire moins 7 degrés Celsius sont satisfaites. En effet, l'injection de l'urée est possible dès le redémarrage du moteur, même par température extérieure très froide. Cela est possible car l'urée a été stockée « au chaud » dans le deuxième volume 20 isolé par rapport à l'environnement extérieur par la paroi interne 15 et surtout par le premier volume 10 contenant le liquide de refroidissement chaud. La solution permet l'injection d'urée dans la phase de démarrage du moteur sans avoir recours à du chauffage ou réchauffage qui impacte en outre les émissions de CO2. On évite ainsi la cristallisation ou gel ou changement de phase de l'urée qui génère une impossibilité de son injection lors de températures extérieures froides et ce, sans recourir à un moyen de réchauffage électrique par nappe ou autre dans le réservoir d'urée.

Grâce à la solution, les exigences réglementaires portant sur les phases de montée en température du moteur thermique sont également satisfaites. En effet, l'isolation du dispositif 5, notamment de sa paroi externe 30, offre une réduction du temps de montée en température au redémarrage du moteur via l'utilisation du liquide de refroidissement stocké dans le premier volume 10, le liquide ne s'étant pas complètement refroidi. En outre, l'urée du deuxième volume 20 participe au maintien à température du liquide de refroidissement au cours du temps sans fonctionnement du moteur, l'urée étant plus chaude que le milieu extérieur. Ainsi, le dispositif 5 permet d'emmagasiner du liquide de refroidissement du moteur 2 et de le stocker « au chaud » dans le premier volume 10 jusqu'à la prochaine phase de démarrage du moteur 2. De plus, la montée rapide en température du moteur permet d'accroître le taux de recyclage des gaz d'échappement (système EGR notamment) ainsi que la rapidité d'activation d'une telle réutilisation. La montée en température rapide du moteur permet en outre une montée en température rapide de l'huile.

La solution est peu encombrante et facilite l'introduction de la réduction catalytique sélective, ou SCR, sur un véhicule automobile, notamment sur un véhicule particulier ne disposant que peu d'espace, notamment au niveau de son compartiment moteur.

De préférence, le dispositif 5 est conçu et/ou dimensionné et/ou isolé pour conserver le liquide de refroidissement chaud, la température du liquide en fonctionnement du moteur étant par exemple de l'ordre de 90 à 110 degrés Celsius.

De préférence, le dispositif 5 est conçu et/ou dimensionné et/ou isolé pour maintenir le liquide de refroidissement et/ou l'urée à température, pendant une durée équivalente à une nuit, soit par exemple pendant 10h à 12h.

De préférence, le dispositif 5 est conçu et/ou dimensionné et/ou isolé de sorte à pouvoir restituer les liquides à température lors des phases de démarrage à froid. Il en résulte une réduction des émissions polluantes et la possibilité d'injection d'urée dans des ambiances très froides sans besoin d'attendre de dégeler l'urée. On s'affranchit alors de l'activation pendant plusieurs minutes de consommateurs électriques (résistances, nappes) fortement pénalisant pour le respect des normes réglementaires.

Par exemple, le niveau d'isolation du dispositif 5 de type réservoir de stockage multi-fluides est adapté en fonction des conditions ambiantes dans lesquelles le véhicule est destiné à circuler, de son emplacement au sein du véhicule, de la température de restitution des fluides et de la durée de restitution souhaitée.

En résumé, la solution permet de mutualiser le réservoir de stockage de liquide de refroidissement avec le circuit d'urée afin de réduire les émissions de polluants.

Comme évoqué précédemment, de préférence, le dispositif 5 permet d'isoler les deux fluides, notamment via deux circuits indépendants. Par exemple, le dispositif 5 permet de préférence que la température de l'urée reste sous une valeur de température de l'ordre de 65 à 70 degrés Celsius. Sous cette plage de valeurs, on évite ainsi d'altérer et de dégrader le fonctionnement du moyen de réduction catalytique 9 et/ou du moyen d'injection 7. Dans ce cas, le dispositif permet de préférence une température de liquide de refroidissement maximale de 90 à 110 degrés Celsius en cas d'intégration au circuit refroidissement du moteur, ou de 55 à 75 degrés Celsius en cas d'intégration sur une boucle basse température du circuit de refroidissement.

De préférence, la répartition des volumes 10, 20 est fonction des besoins en termes de volume d'urée et de la place disponible au sein du véhicule. Les volumes des deux fluides, sous réserve d'être isolés l'un de l'autre, sont par exemple répartis indifféremment dans le dispositif 5 en fonction des problématiques d'implantation sur le véhicule et de l'accessibilité pour la connexion des tuyaux ou conduits ou lignes concernant l'urée et concernant le liquide de refroidissement.

Ainsi, on récupère les calories du liquide de refroidissement (de préférence basse température) pour réchauffer une quantité tampon d'urée dans le deuxième volume 20 du dispositif 5. Le volume tampon est séparé du module d'injection d'urée qui comprend un volume davantage conséquent d'urée, notamment par le biais du réservoir 4. Ainsi le volume tampon 20 dépend du temps d'activation souhaité, des paramètres moteurs, de la zone d'utilisation du véhicule ou encore de l'évolution de la législation en termes de dépollution. A titre d'exemple, le volume total d'urée dans un tel véhicule est par exemple compris entre 10 litres et 30 litres. Toutefois, au regard des futures exigences réglementaires, le volume total d'urée pourrait évoluer à la hausse.

De manière générale, le dispositif 5 est adapté au véhicule auquel il est destiné, en particulier au compartiment moteur de ce véhicule.

Avantageusement, comme illustré sur la figure 1, le moyen d'injection 7 permet une injection d'urée au plus près du moteur (par exemple au niveau du collecteur d'échappement) et une injection sur la ligne d'échappement 3 sous caisse. Alternativement, un seul point d'injection d'urée peut être envisagé. Alternativement encore, trois voire davantage de points d'injection d'urée peuvent être envisagés.

Vu que la solution offre une économie d'énergie électrique, cette énergie peut servir à d'autres fonctions telles que par exemple le chauffage des sièges ou du volant.

Alternativement, le bocal de stockage de liquide de refroidissement est directement intégré sur le réservoir d'urée. Il en résulte une simplification de mise en œuvre sur le véhicule de par l'absence de pompe supplémentaire et spécifique pour l'urée, un gain en termes d'encombrement ou encore un circuit d'urée plus simple. La circulation de l'urée dans ce cas est assurée par une pompe d'un module comportant une jauge pompe tel qu'il est connu en tant que module intégré dans un réservoir à carburant.

En remarque, la solution atteint donc l'objectif recherché de satisfaire des normes de dépollution dès le démarrage du moteur et présente les avantages suivants :
- un autre fluide pour réchauffer l'urée peut être utilisé, par exemple l'huile moteur ;
- elle peut être utilisée sur d'autres véhicules équipés d'un moteur thermique, en particulier les véhicules industriels, les engins de chantier, les engins agricoles.

## Revendications

1. Dispositif (5) comprenant un premier volume (10) de stockage d'un premier liquide de type huile moteur d'un moyen d'entraînement (2) d'un véhicule, notamment d'un véhicule automobile (1), le dispositif (5) comprenant un deuxième volume (20) destiné à stocker un deuxième liquide utilisé dans un moyen de réduction catalytique sélective au niveau d'une ligne échappement (3) d'un moyen d'entraînement (2) de type moteur à combustion interne, notamment un deuxième liquide de type urée ou comprenant de l'urée, le dispositif étant apte à chauffer un tel deuxième liquide par transfert de chaleur issue d'un tel premier liquide, **caractérisé en ce que** le dispositif (5) comprend une paroi interne (15) agencée entre le premier volume (10) et le deuxième volume (20) de sorte à transférer de la chaleur d'un tel premier liquide vers un tel deuxième liquide par conduction thermique au niveau de la paroi interne (15), et **en ce que** la paroi interne (15) est en matériau ayant une forte conductivité thermique, notamment en aluminium ou en alliage d'aluminium, et **en ce que** le dispositif (5) comprend une paroi externe (30) isolée, notamment recouverte d'un isolant thermique ou comprenant un isolant thermique.

2. Dispositif (5) selon la revendication précédente, **caractérisé en ce que** le premier volume (10) et le deuxième volume (20) sont indépendants.

3. Dispositif (5) selon la revendication précédente, **caractérisé en ce que** la paroi interne (15) comprend une forme de conduit qui définit au moins partiellement le deuxième volume (20), notamment une forme de conduit de section cylindrique, le conduit s'étendant, ou s'étendant sensiblement, ou s'étendant au moins en partie, dans le premier volume (10).

4. Dispositif (5) selon l'une des revendications 1 à 3, **caractérisé en ce que** la paroi interne (15) a une faible épaisseur, notamment comprise entre 0.8 mm et 1.5 mm.

5. Dispositif (5) selon l'une des revendications précédentes, **caractérisé en ce que** le dispositif (5) est monobloc.

6. Système (6) comprenant un dispositif (5) selon l'une des revendications précédentes,
**caractérisé en ce que** le système (6) comprend :
- un moyen d'injection (7) d'un deuxième liquide de type urée ou comprenant de l'urée au sein d'un moyen de réduction catalytique sélective (9) au niveau d'une ligne d'échappement (3) d'un moyen d'entraînement (2) de type moteur à combustion interne, le moyen d'injection (7) étant connecté au deuxième volume (20) de stockage du dispositif (5),
- le premier volume (10) de stockage du dispositif (5) comprend le premier liquide de type huile moteur pour réchauffer le deuxième liquide présent au sein du deuxième volume (20) du dispositif (5).

7. Système (6) selon la revendication précédente, **caractérisé en ce qu'**il comprend un réservoir (4) de deuxième liquide connecté au deuxième volume (20) du dispositif (5) de sorte que la contenance du deuxième volume (20) est une réserve tampon du deuxième liquide.

8. Véhicule, notamment véhicule automobile (1), **caractérisé en ce qu'**il comprend un système (6) selon l'une des revendications 6 ou 7, ou un dispositif (5) selon l'une des revendications 1 à 5.

## Patentansprüche

1. Vorrichtung (5) mit einem ersten Volumen (10) zur Speicherung einer ersten Flüssigkeit vom Typ Motoröl eines Antriebsmittels (2) eines Fahrzeugs, insbesondere eines Kraftfahrzeugs (1), wobei die Vorrichtung (5) ein zweites Volumen (20) aufweist, das zur Speicherung einer zweiten Flüssigkeit bestimmt ist, die in einem Mittel zur selektiven katalytischen Reduktion an einer Abgasleitung (3) eines Antriebsmittels (2) vom Typ Verbrennungsmotor verwendet wird, insbesondere einer zweiten Flüssigkeit vom Typ Harnstoff oder mit Harnstoff, wobei die Vorrichtung in der Lage ist, eine solche zweite Flüssigkeit durch Wärmeübertragung von einer solchen ersten Flüssigkeit zu erhitzen, **dadurch gekennzeichnet, dass** die Vorrichtung (5) eine Innenwand (15) aufweist, die zwischen dem ersten Volumen (10) und dem zweiten Volumen (20) angeordnet ist, um Wärme von einer solchen ersten Flüssigkeit auf eine solche zweite Flüssigkeit durch Wärmeleitung an der Innenwand (15) zu übertragen, und dass die Innenwand (15) aus einem Material mit hoher Wärmeleitfähigkeit besteht, insbesondere aus Aluminium oder einer Aluminiumlegierung, und dass die Vorrichtung (5) eine isolierte Außenwand (30) aufweist, die insbesondere mit einem Wärmedämmstoff bedeckt ist oder einen Wärmedämmstoff aufweist.

2. Vorrichtung (5) nach dem vorhergehenden Anspruch, **dadurch gekennzeichnet, dass** das erste Volumen (10) und das zweite Volumen (20) unabhängig sind.

3. Vorrichtung (5) nach dem vorhergehenden Anspruch, **dadurch gekennzeichnet, dass** die Innenwand (15) eine Kanalform aufweist, die zumindest teilweise das zweite Volumen (20) definiert, insbesondere eine Kanalform mit zylindrischem Querschnitt, wobei sich der Kanal vollständig, im Wesentlichen vollständig oder zumindest teilweise in das erste Volumen (10) erstreckt.

4. Vorrichtung (5) nach einem der Ansprüche 1 bis 3, **dadurch gekennzeichnet, dass** die Innenwand (15) eine geringe Dicke aufweist, insbesondere zwischen 0,8 mm und 1,5 mm.

5. Vorrichtung (5) nach einem der vorhergehenden Ansprüche, **dadurch gekennzeichnet, dass** die Vorrichtung (5) einteilig ist.

6. System (6) mit einer Vorrichtung (5) nach einem der vorhergehenden Ansprüche,
**dadurch gekennzeichnet, dass** das System (6) Folgendes aufweist:
- ein Mittel (7) zum Einspritzen einer zweiten Flüssigkeit vom Typ Harnstoff oder mit Harnstoff in ein Mittel (9) zur selektiven katalytischen Reduktion an einer Abgasleitung (3) eines Antriebsmittels (2) vom Typ Verbrennungsmotor, wobei das Mittel (7) zum Einspritzen mit dem zweiten Speichervolumen (20) der Vorrichtung (5) verbunden ist,
- wobei das erste Speichervolumen (10) der Vorrichtung (5) die erste Flüssigkeit vom Typ Motoröl enthält, um die zweite Flüssigkeit, die sich innerhalb des zweiten Volumens (20) der Vorrichtung (5) befindet, zu erhitzen.

7. System (6) nach dem vorhergehenden Anspruch, **dadurch gekennzeichnet, dass** es einen Behälter (4) für eine zweite Flüssigkeit aufweist, der mit dem zweiten Volumen (20) der Vorrichtung (5) verbunden ist, sodass das Fassungsvermögen des zweiten Volumens (20) einen Puffervorrat der zweiten Flüssigkeit darstellt.

8. Fahrzeug, insbesondere ein Kraftfahrzeug (1), **dadurch gekennzeichnet, dass** es ein System (6) nach einem der Ansprüche 6 oder 7 oder eine Vorrichtung (5) nach einem der Ansprüche 1 bis 5 aufweist.

## Claims

1. Device (5) comprising a first volume (10) for storing a first liquid of the engine-oil type, for a drive means (2) that powers a vehicle, in particular a motor vehicle (1), the device (5) comprising a second volume (20) intended for storing a second liquid used in a selective catalytic reduction means at an exhaust line (3) of a drive means (2) of internal combustion engine type, in particular a second liquid of the urea type or comprising urea, the device being able to heat such a second liquid by transferring heat from such a first liquid, **characterized in that** the device (5) comprises an inner wall (15) arranged between the first volume (10) and the second volume (20) so as to transfer heat from such a first liquid to such a second liquid by thermal conduction at the inner wall (15), and **in that** the inner wall (15) is made from a material having high thermal conductivity, in particular aluminium or aluminium alloy, and **in that** the device (5) comprises an insulated outer wall (30), in particular covered with a thermal insulator or comprising a thermal insulator.

2. Device (5) according to the preceding claim, **characterized in that** the first volume (10) and the second volume (20) are independent.

3. Device (5) according to the preceding claim, **characterized in that** the inner wall (15) comprises a pipe shape which at least partially defines the second volume (20), in particular a pipe shape with a cylindrical cross section, the pipe extending, or extending substantially, or extending at least partly, into the first volume (10).

4. Device (5) according to one of Claims 1 to 3, **characterized in that** the inner wall (15) has a small thickness, in particular of between 0.8 mm and 1.5 mm.

5. Device (5) according to one of the preceding claims, **characterized in that** the device (5) is a one-piece component.

6. System (6) comprising a device (5) according to one of the preceding claims,
**characterized in that** the system (6) comprises:
- an injection means (7) for injecting a second liquid of the urea type or comprising urea into a selective catalytic reduction means (9) at an exhaust line (3) of a drive means (2) of internal combustion engine type, the injection means (7) being connected to the second storage volume (20) of the device (5),
- the first storage volume (10) of the device (5) comprises the first liquid of engine oil type for heating the second liquid present inside the second volume (20) of the device (5).

7. System (6) according to the preceding claim, **characterized in that** it comprises a tank (4) of second liquid connected to the second volume (20) of the device (5) such that the content of the second volume (20) is a buffer supply of the second liquid.

8. Vehicle, in particular a motor vehicle (1), **characterized in that** it comprises a system (6) according to one of Claims 6 or 7, or a device (5) according to one of Claims 1 to 5.
